# EUROPÄISCHE PATENTSCHRIFT

(11) **EP 0 563 743 B1**
(45) Veröffentlichungstag und Bekanntmachung des Hinweises auf die Patenterteilung: **22.01.1997**
(21) Anmeldenummer: 93104707.0
(22) Anmeldetag: 22.03.1993
(51) Int. Cl.: H04M 3/42, H04M 1/27

(54) **Teilnehmerkommunikationssystem mit Teilnehmerendgeräten auf denen beschriftbare Tasten angeordnet sind**
Telecommunication system and subscriber terminals with labels on the keys
Système de télécommunication et postes d'abonnés munis de touches portant une inscription

(30) Priorität: 30.03.1992 DE 4210409
(43) Veröffentlichungstag der Anmeldung: 06.10.1993
(73) Patentinhaber: SIEMENS AKTIENGESELLSCHAFT, 80333 München (DE)
(72) Erfinder: Lubcke, Hartmut, Dipl.-Ing., W-8000 München 19 (DE); Kremer, Peter, Dipl.-Ing., W-8000 München 40 (DE); Schaumburger, Fritz, Dipl.-Ing., W-8000 München 2 (DE)

(56) Entgegenhaltungen:
- EP-A- 0 365 200
- DE-A- 3 039 800
- DE-A- 3 828 173
- PATENT ABSTRACTS OF JAPAN vol. 15, no. 280 (E-1090) 23. April 1991 & JP-A-30 97 366
- PATENT ABSTRACTS OF JAPAN vol. 14, no. 157 (M-955) 23. Januar 1990 & JP-A-20 19 237

## Beschreibung

Die Erfindung betrifft ein Teilnehmerkommunikationssystem gemäß dem Oberbegriff des Patentanspruchs 1. Üblicherweise werden die Schilder zur Beschriftung der Tastenfunktionen eines Teilnehmerendgerätes von Hand oder mit Schreibmaschine beschriftet. Zum Lieferumfang von Teilnehmerendgeräten gehören häufig nur beschriftete Schilder von solchen Funktionstasten, deren Funktionen generell auf jedem vergleichbaren Teilnehmerendgerät verfügbar sind. Für Tasten, deren Funktion vom Teilnehmer selbst oder vom Betreiber des Teilnehmerkommunikationssystems festgelegt werden kann, werden unbeschriftete Schilder mitgeliefert.

Diese unbeschrifteten Schilder müssen dann für jedes Teilnehmerendgerät mit relativ hohem zeitlichen Aufwand individuell beschriftet werden. Die Wahrscheinlichkeit, daß beispielsweise ein mit einer Telefonnummer beschriftetes Schild nicht mit der tatsächlich für diese Taste gespeicherten Telefonnummer übereinstimmt, ist verhältnismäßig groß, da Schreibfehler auftreten können. Zudem muß jeweils ein neues Schild mit entsprechendem Aufwand erstellt werden, wenn die Funktion einer Taste geändert wird.

Der vorliegenden Erfindung liegt die Aufgabe zugrunde, die Kennzeichnung von einem Teilnehmerendgerät eines Teilnehmerkommunikationssystems zugeordneten Funktionstasten, deren Funktion frei bestimmbar, ist so zu verbessern, daß eine eindeutige und fehlerfreie Kennzeichnung bei einem einheitlichen optischen Erscheinungsbild des Tastenfeldes gewährleistet ist, ohne daß zusätzlicher Beschriftungsaufwand für den Benutzer des Teilnehmerendgerätes auch bei einer Änderung der Funktion einer Taste, erforderlich ist.

Diese Aufgabe wird erfindungsgemäß durch die im Patentanspruch 1 angegebenen Merkmale gelöst. Vorteilhafte Ausgestaltungen und Weiterbildungen der Erfindung sind in Unteransprüchen angegeben. Ein Ausführungsbeispiel der Erfindung wird im folgenden anhand der Zeichnung näher erläutert. Dabei zeigen
Figur 1 einige Komponenten eines Teilnehmerkommunikationssystems,
Figur 2 ein Ablaufdiagramm zur Belegung von Funktionstasten und
Figur 3 ein Formblatt mit Schildern.

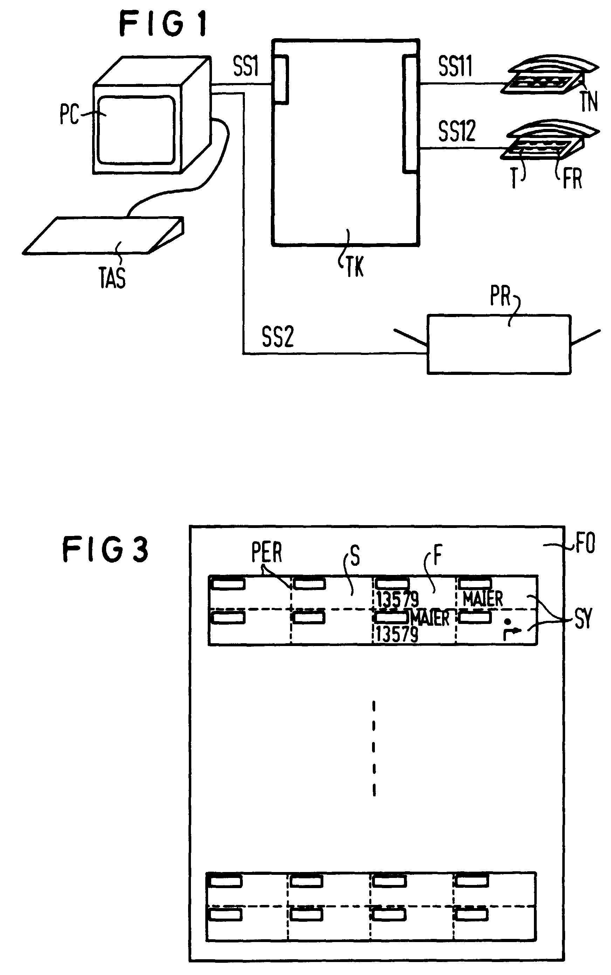

Das Teilnehmerkommunikationssystem gemäß Figur 1 besteht aus einer Vermittlungsanlage TK, an die über Leitungen SS11, 5512 Teilnehmerendgeräte TN und über eine Leitung SS1 ein Rechner PC angeschlossen ist. Der Rechner ist über eine Leitung SS2 mit einem Drucker PR verbunden. Die Eingabe am Rechner PC erfolgt über eine Tastatur TAS.

Die Teilnehmerendgeräte TN verfügen jeweils über ein Tastenfeld, das auch acht Funktionstasten T umfaßt, deren Funktion frei wählbar ist. Diese Funktionstasten T sind in zwei Zeilen und vier Spalten matrixartig auf dem Teilnehmerendgerät TN angeordnet. Der Abstand zwischen den Tasten T ist so groß, daß über jede Taste ein Schild mit einem dem Querschnitt der Taste T angepaßten Durchbruch auf einen Freiraum FR gelegt werden kann.

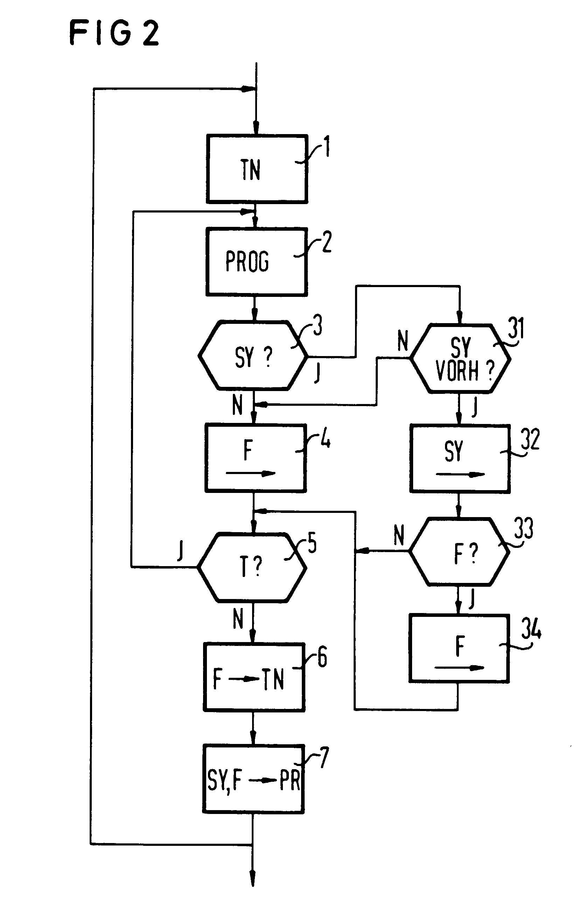

Bei der Konfiguration des Teilnehmerkommunikationssystems werden zentral mit Hilfe des Rechners PC auch die Funktionen F jeder Funktionstaste T jedes Teilnehmerendgerätes TN festgelegt. Diesen Vorgang zeigt das Ablaufdiagramm gemäß Figur 2. Eine Funktionstaste T eines Teilnehmerendgerätes TN soll als Zielwahltaste zu einem anderen TeilnehmerendTN festgelegt werden. In einem ersten Schritt 1 wird cem Rechner PC mitgeteilt, für welches Teilnehmerendgerät TN nachfolgend die Funktion F einer Funktionstaste T festgelegt werden soll. In einem zweiten Schritt 2 wird für die gewünschte Funktionstaste T die Funktion F, beispielsweise eine Telefonnummer, über die Tastatur TAS in den Rechner PC eingegeben. In einem dritten Schritt 3 wird festgestellt, ob ein die Funktion F bezeichnendes Symbol SY auf dem Schild S angegeben werden soll. Wenn nein, wird in einem vierten Schritt 4 die Funktionsbezeichnung, hier die Telefonnummer, in einen der Funktionstaste T zugeordneten Textspeicher geschrieben. Ist die Angabe eines Symbols SY, hier der der Telefonnummer zugeordnete Name gewünscht, dann wird in einem ersten Nebenschritt 31 in einem im Rechner PC vorhandenen Register überprüft, ob zu der Funktion F ein Symbol SY vorhanden ist. Ist dies nicht der Fall, dann wird der vierte Schritt 4 abgearbeitet. Ist jedoch der Funktion F im Register ein Symbol SY zugeordnet, dann wird in einem zweiten Nebenschritt 32 das Symbol SY in den der Funktionstaste zugeordneten Textspeicher geschrieben. In einem dritten Nebenschritt 33 wird festgestellt, ob die Tastenfunktion F zusätzlich zum Symbol SY auf das Schild S geschrieben werden soll. Wenn ja, wird in einem vierten Nebenschritt 34 die Bezeichnung der Funktion F in den der Funktionstaste T zugeordneten Textspeicher geschrieben. Ist ein Funktionseintrag nicht gewünscht oder ist der Funktionseintrag im vierten Nebenschritt 34 oder im vierten Schritt 4 erfolgt, dann wird in einem fünften Schritt 5 überprüft, ob für eine weitere Funktionstaste T des Teilnehmerendgerätes TN eine Funktion F programmiert werden soll. Wenn ja, werden die Schritte 2 bis 4 wiederholt. Wenn nein, dann werden in einem sechsten Schritt 6 die den Tasten T zugeordneten Funktionen F zum Teilnehmerendgerät TN übertragen. In einem siebten Schritt werden die Inhalte der Textspeicher zum Drucker PR übertragen und dort auf einem Formblatt FO ausgedruckt.

Dieses Formblatt FO ist in Figur 3 dargestellt. Das Formblatt FO besteht beispielsweise aus weißem Karton. Auf dem Formblatt FO sind einzelne Gruppen von Abschnitten erkennbar, die, so wie die Funktionstasten T auf den Teilnehmerendgeräten TN, auf dem Formblatt FO matrixartig angeordnet sind. Jeder Abschnitt dient als Schild S, das in einen Freiraum FR (Figur 1) einer Funktionstaste T eingelegt werden kann. Jeder Abschnitt kann aus dem Formblatt FO herausgelöst werden. Um dies zu vereinfachen, ist der Rand jedes Abschnitts perforiert. Der Abschnitt wird entlang der Perforation PER aus dem Formblatt FO herausgetrennt.

Die Inhalte der Textspeicher des Rechners PC werden mit Hilfe des Druckers DR auf das Formblatt FO gedruckt. Die Abschnitte werden jeweils mit dem Symbol SY und/oder der Funktion F bedruckt, das bzw. die der an diesem Matrixpunkt angeordneten Funktionstaste T zugeordnet ist bzw. sind. Die zusammenhängenden Abschnittsgruppen des Formblattes FO werden dem Benutzer jedes Teilnehmerendgerätes TN zur Verfügung gestellt. Der Benutzer oder eine beauftragte Person legt oder befestigt die Abschnittsgruppen abschnittsweise oder zusammenhängend in die Freiräume FR. Damit sind die Funktionstasten T eindeutig und fehlerfrei gekennzeichnet. Das optische Erscheinungsbild des Tastenfeldes ist verbessert und für den Benutzer des Teilnehmerendgerätes TN entsteht kein organisatorischer Zusatzaufwand für die Definition und Beschriftung der Funktionstasten T.

Wird eine Funktionstaste T z.B. mit der Funktion der Anrufumleitung belegt, dann kann ein dieser Funktion F zugeordnetes Symbol SY, z.B. ein aus einem Punkt und einem um diesen Punkt gelenkten Pfeil bestehendes Piktogramm, beim ersten Nebenschritt 31 des in Figur 2 dargestellten Ablaufdiagramms aus dem Register gelesen werden und entsprechend auf dem Formblatt FO ausgedruckt werden.

Vom Teilnehmerendgerät TN aus kann jederzeit die Funktion F jeder Funktionstaste T geändert werden. Wird eine solche Änderung vorgenommen, dann löst dies einen neuen Ausdruck eines Schildes S im Drucker PR aus. Dadurch ist eine hohe Flexibilität der Änderung der Tastenbelegung ohne organistorischen Zusatzaufwand für die Beschriftung der Funktionstasten T gegeben.

## Patentansprüche

1. Teilnehmerkommunikationssystem, das mindestens aus einer Vermittlungsanlage, einer Mehrzahl von Teilnehmerendgeräten, auf denen beschriftbare Tasten angeordnet sind und einem mit einem Drucker verbundenen Rechner besteht, wobei die Funktion mindestens einer Taste an mindestens einem Teilnehmerendgerät zentral mit Hilfe des Rechners bestimmbar ist und dieser Taste des Teilnehmerendgerätes ein Freiraum zugeordnet ist, auf dem ein mit der Tastenfunktion und/oder mit einem die Tastenfunktion angebenden Symbol beschriftetes Schild anbringbar ist, **gekennzeichne**t durch eine zentrale Beschriftung des Schildes (S) mit Hilfe des dem Rechner (PC) zugeordneten Druckers (PR).

2. Teilnehmerkommunikationssystem nach Anspruch 1, **gekennzeichnet durch** ein Formblatt (FO) mit einzelnen vom Formblatt (FO) trennbaren auf jeweils einem Freiraum (FR) des Teilnehmerendgerätes (TN) anbringbaren, die Form eines Schildes (S) aufweisenden Abschnitten, durch eine Anordnung der Abschnitte auf dem Formblatt (FO), die der Anordnung der Freiräume (FR) auf dem Teilnehmerendgerät (TN) entspricht und durch ein Beschriften jedes Abschnitts mit der entsprechenden Tastenfunktion (F) und/oder dem die Tastenfunktion (F) angebenden Symbol (SY).

3. Teilnehmerkommunikationssystem nach einem der vorhergehenden Ansprüche, **gekennzeichnet durch** eine Beschriftung der Schilder (S) im Zusammenhang mit einer Konfiguration des Teilnehmerkommunikationssystems.

4. Teilnehmerkommunikationssystem nach einem der vorhergehenden Ansprüche, **gekennzeichnet durch** eine zentrale Beschriftung eines Schildes (S) infolge einer von Seiten eines Teilnehmerendgerätes (TN) vorgenommenen Änderung der Funktion (F) einer Taste (T).

5. Teilnehmerkommunikationssystem nach einem der vorhergehenden Ansprüche, **gekennzeichnet durch** eine wahlweise Beschriftung eines Schildes (S) mit einer Telefonnummer und/oder einem durch einen Telefonbucheintrag dieser Telefonnummer zugeordneten Namen.

## Claims

1. Subscriber communications system which comprises at least one exchange, a plurality of subscriber terminals on which keys which can be labelled are arranged and a computer which is connected to a printer, it being possible to determine the function of at least one key at at least one subscriber terminal centrally using the computer and a free space being assigned to this key of the subscriber terminal, on which free space a label on which the function of the key and/or a symbol indicating the function of the key is printed can be positioned, characterized by central printing of the label (S) using the printer (PR) assigned to the computer (PC).

2. Subscriber communications system according to Claim 1, characterized by a form (FO) with individual sections which can be separated from the form (FO), can be positioned in each case on a free space (FR) of the subscriber terminal (TN) and are in the form of a label (S), by an arrangement of the sections of the form (FO) corresponding to the arrangement of the free spaces (FR) on the subscriber terminal (TN) and by the corresponding function (F) of the key and/or the symbol (SY) indicating the function (F) of the key being printed on each section.

3. Subscriber communications system according to one of the preceding claims, characterized by the labels (S) being printed in conjunction with a configuration of the subscriber communication system.

4. Subscriber communications system according to one of the preceding claims, characterized by central printing of a label (S) as a result of a subscriber terminal (TN) having brought about a change in the function (F) of a key (T).

5. Subscriber communications system according to one of the preceding claims, characterized by a telephone number and/or a name assigned to this telephone number by means of an entry in a telephone directory being optionally printed on a label (S).

## Revendications

1. Système de communication d'abonné, qui est constitué d'au moins une installation de commutation, d'une pluralité de terminaux d'abonnés sur lesquels sont prévus des touches sur lesquelles il peut être écrit et d'un ordinateur relié à une imprimante, dans lequel la fonction d'au moins une touche peut être déterminée sur au moins un terminal d'abonné de manière centrale à l'aide de l'ordinateur, et un espace libre, dans lequel il peut être mis une étiquette sur laquelle est écrit la fonction de la touche et/ou un symbole indiquant celle-ci, est associé à cette touche du terminal d'abonné, caractérisé par le fait qu'il est écrit de manière centrale sur l'étiquette (S) à l'aide de l'imprimante (PR) associée à l'ordinateur (PC).

2. Système de communication d'abonné suivant la revendication 1, caractérisé par un formulaire (FO) ayant diverses parties pouvant en être détachées et pouvant être mises sur un espace libre (FR) du terminal (TN) d'abonné et ayant la forme d'une étiquette (S), par une disposition des parties sur le formulaire (FO), qui correspond à la disposition des espaces libres (FR) sur le terminal (TN) d'abonné et par le fait qu'il est écrit sur chaque partie la fonction (F) de la touche correspondante et/ou le symbole (SY) indiquant la fonction (F) de la touche.

3. Système de communication d'abonné suivant l'une des revendications précédentes, caractérisé par une écriture sur les étiquettes (S) en relation avec une configuration du système de communication d'abonné.

4. Système de communication d'abonné suivant l'une des revendications précédentes, caractérisé par une écriture centrale sur une étiquette (S) suite à une modification de la fonction (F) d'une touche (T), effectuée du côté d'un terminal (TN) d'abonné.

5. Système de communication d'abonné suivant l'une des revendications précédentes, caractérisé par le fait qu'il est écrit au choix sur une étiquette (S) un numéro de téléphone et/ou un nom associé à ce numéro de téléphone par un enregistrement des abonnés dans l'annuaire téléphonique.
